# EUROPEAN PATENT APPLICATION

(11) **EP 1 033 349 A1**
(43) Date of publication of application: **06.09.2000**
(21) Application number: 99400530.4
(22) Date of filing: 04.03.1999
(51) Int. Cl.: C02F 11/14, C02F 1/52

(54) **Composition for waste water treatment**

(71) Applicant: Kouyu Co., Ltd., Kitakyushu-shi, Fukuoka (JP)
(72) Inventor: Hata, Kouyu, c/o Kouyu Co., Ltd., Kitakyushu-shi, Fukuoka (JP); Hata, Hiroshi, c/o Kouyu Co., Ltd., Kitakyushu-shi, Fukuoka (JP); Hidaka, Takeki, c/o Kouyu Co., Ltd., Kitakyushu-shi, Fukuoka (JP); Maki, Yasuhiro, c/o Kouyu Co., Ltd., Kitakyushu-shi, Fukuoka (JP)
(74) Representative: Clisci, Serge

(57) **Abstract**

The wet sewage disposal agent contains 100 parts by weight of calcium oxide, 5-30 parts by weight of sodium silicate, 5-30 parts by weight of silica, and 1-10 parts by weight of an ammonium ion trapping agent. This wet sewage disposal agent treats wet sewage such as manure or garbage in an extremely short period of time at a higher degree of efficiency.

## Description

### BACKGROUND OF THE INVENTION

### 1. Field of the Invention

The present invention relates to a wet sewage disposal agent and a wet sewage disposal method for disposing of wet sewage. More particularly, the present invention relates to a wet sewage disposal agent suitable for use in disposing of wet sewage including waste material, e.g., excrete, garbage, etc. from animals, factories, etc. and a wet sewage disposal method for disposing of wet sewage, which are superior in saving energy for disposal, which can dispose it in a short period of time with high efficiency and at a high level of sanitation.

### 2. Description of the Prior Art

At the present time, the rate of extension of a sewer system is less than 50% throughout the country. In districts where no sewer system is disposed, sewage from homes and various facilities including, e.g., hospitals, plants, etc. and sludge of disposal tanks, etc. are collected by vacuum cars or the like and transferred to disposal facilities to treat them in various ways. Further, wet garbage from homes, etc. are collected by garbage collection trucks and many of them are treated by burning or dumping.

In disposal facilities, sewage collected and transferred is then treated with microorganisms to divide it into solid and liquid materials. The solid material may be utilized as fertilizers or subjected to disposal by burning, while liquid materials is further subjected to a series of various treatments including, e.g., aggregation or precipitation, filtering, treatment with activated carbon, treatment with ozone, removal of nitrogen, phosphorus and the like and then drained to rivers, seas, etc. As is apparent from this, such wet sewage disposal requires large-size facilities and requires expensive costs for equipment, treatment and labor. Likewise, disposal of solid material requires tremendously high costs.

Waste matters including manure, etc. from animals may be collected and processed to form composts. The formation of composts, however, requires a long period of time for fermentation or aging, generates an offensive odor around nearby areas, and causes pollution of underground water including well water, etc. in some areas.

As garbage from homes has a high water content, the garbage disposal requires a large amount of heavy oil for evaporating the water therefrom so that the garbage disposal lacks savings of energy.

Given the above-mentioned problems in sewage disposal, there have been proposed various wet sewage disposal agents for use in removal of water by evaporation of water from wet waste matters including, e.g., sewage, sludge, etc. and wet sewage disposal methods for treating such wet waste matters with such wet sewage disposal agents.

Such wet sewage disposal agents include, for example, a wet sewage disposal agent as disclosed in Japanese Patent Application Publication (Kokai) No. 8-24,900, which comprises a composition containing calcium oxide and sodium silicate as major components. The patent publication further discloses a wet sewage disposal method for disposing of sewage and sludge, etc., containing a hazardous heavy metal with a such wet sewage disposal agent.

Further, Japanese Patent Publication (Kokai) No. 8-182,999 discloses a wet sewage disposal method comprising mixing sewage sludge with calcium oxide and dehydrating the sewage sludge, while treating larger quantities of ammonia gas which was caused to generate concurrently with the mixing of the calcium oxide, and adding an acidic powdery material for preventing the generation and diffusion of a small amount of ammonia gas adsorbed in the dehydrated solid material.

Such prior art technology, however, suffers from various disadvantages and difficulties.

For instance, the wet sewage disposal agent as disclosed in Japanese Patent Application Publication (Kokai) No. 8-24,900 enables an alkaline gel material resulting from calcium oxide and sodium silicate to effectively adsorb malodorous materials of weak acidic properties, such as mercaptan, hydrogen sulfide, etc., when wet sewage including manure from animals, garbage from homes and the like are treated, however, materials of weak alkaline properties such as, e.g., ammonia gas, trimethyl amine gas, etc., which are caused to generate upon decomposition of nitrogenous components contained in manure and garbage, etc. are unlikely to be adsorbed on the gel material. Therefore, the wet sewage disposal agent suffers from the disadvantages that malodors resulting from ammonia gas or trimethy amine gas, etc. is likely to leak outside a reaction system and the use of the such wet sewage disposal agent further requires a separate installation of a deodorizing apparatus.

On the other hand, the wet sewage disposal method as disclosed in Japanese Patent Application Publication (Kokai) No. 8-182,999 generates larger quantities of ammonia gas and trimethyl amine gas during the disposal with calcium oxide so that a large-size absorption apparatus for absorbing such gases should be mounted on a reaction apparatus, thereby making the instrument complicated and large in size and requiring a large amount of equipment costs. At the same time, a disposal agent is required additionally so that the disposal method suffers from the disadvantage that it lacks economy. In addition, an acidic powdery material has to be also added at a later stage so that the step for adding such material is required, thereby making the method complicated and poor in workability.

### SUMMARY OF THE INVENTION

Therefore, the present invention has solved the above-mentioned problems prevailing in the conventional technology and the present invention has the object to provide a wet sewage disposal agent for disposing of wet sewage, which fails to require a heating apparatus and generating temperature high enough to remove water from the sewage simply by mixing with wet sewage including, e.g., manure from animals, garbage from homes, etc., which is superior in saving energy, which controls the evaporation and diffusion of a malodorous component contained in the wet sewage during disposal, and which can kill hazardous organisms and keep the disposal in a clean sanitary condition.

In order to achieve the object, the present invention provides a wet sewage disposal agent for disposing of wet sewage, which comprises

The present invention has another object to provide a wet sewage disposal method for disposing of wet sewage, which fails to require a complicated equipment system, which can be operated in a simplified way and in a short period of time, and which can achieve a high level of workability and disposal efficiency, in addition to the effects as described above.

The other objects, features and advantages of the present invention will become apparent in the course of the description which follows.

### DESCRIPTION OF THE PREFERRED EMBODIMENTS

The present invention will be described in more detail by way of specific embodiments.

The wet sewage disposal agent according to the present invention may comprise a composition containing 100 parts by weight of calcium oxide, 5-30 parts by weight of sodium silicate, 5-30 parts by weight of silica, and 1-10 parts by weight of an ammonium ion trapping agent.

The composition can give hydration heat at a very high temperature by the addition of water to the calcium oxide in accordance with the following chemical formula:

CaO + H₂O → Ca(OH)₂+ 15.2 Kcal

This hydration heat can raise the temperature in a wet sewage disposal system and evaporate the water contained therein, leaving the sewage in a powdery form. The hydration heat can further serve as killing germs existing in the wet sewage.

Moreover, the wet sewage disposal agent can adsorb weakly acidic and malodorous components including, e.g., mercaptan, etc., on reaction products which are insoluble in water and which are obtained by reacting calcium oxide with sodium silicate. The reaction products may include, for example, sodium silicate gel, calcium silicate gel, sodium calcium silicate gel, and the like.

Further, the wet sewage disposal agent according to the present invention contains the ammonium ion trapping agent and the silica including, e.g., silica gel, etc., so that it can adsorb ammonium ions in an efficient way, thereby preventing ammonia gases generated upon disposal from adversely affecting the environment around the disposal site. In addition, the wet sewage to be treated contains nitrogenous components in large quantities so that it may also be used for manufacturing fertilizers, soil conditioning agents and the like.

For the wet sewage disposal agent according to the present invention, there may be used calcium oxide which may be of a purified grade or calcined lime having a purity grade of 50% or higher. When the calcined lime is used, it is preferred to use it having a purity grade of 80% or higher because the reaction heat becomes higher as the purity of the calcined lime becomes lower and this tendency may be caused to occur remarkably if the purity becomes lower than 50%.

Further, the calcium oxide including, e.g., the calcined lime may be used in the form of powder, granule or conglomerate. They may preferably have an average particle size in the range of from approximately 10 mm to 0.001 mm and particularly from approximately 1 mm to 0.05 mm. If their average particle size becomes smaller than approximately 0.05 mm, on the one hand, the tendency may be likely to occur that the hydration reaction may proceed too faster and consequently the wet sewage may be left untreated in larger quantities. In addition, the calcium oxide and the calcined lime having such a smaller particle size are difficult to handle in manufacturing the wet sewage disposal agent and suffer from the difficulties that they may become too large in surface areas and become very likely to deteriorate to a larger extent. If the calcium oxide and the calcined lime having an average particle size larger than approximately 1 mm are employed, on the other hand, the tendency may be likely to occur that the hydration reaction may proceed at a slower reaction speed and take a longer period of time. Further, it is difficult to raise the high temperature so that the reaction time may become longer. The longer reaction time may be likely to leave the materials unreacted. Further, the heat may be diffused to decrease the action of making the treated materials into a powdery form. These tendencies are not preferred for treating the wet sewage in an efficient manner.

When the calcined lime is coated with fat and oil, it may be preferably used even if the average particle size thereof ranges from approximately 2 mm to 0.05 mm. Although the particle size of the calcined lime may vary with the amount or the kind of the fat and oil, the amount of the fat and oil may become larger as the average particle size becomes smaller than approximately 0.05 mm. However, in this case, the reaction rate of the hydration reaction may arise and the reaction may be caused to occur rapidly. On the other hand, as the average particle size of the calcined lime becomes greater than approximately 2 mm, the tendency may be caused to occur that the maximum temperature upon treatment may be lowered. In either case, it is not preferred to coat the fat and oil on the calcined lime having the average particle size outside the lower and larger limits.

For the wet sewage disposal agent according to the present invention, the calcium oxide including the calcined lime may be preferably coated with fat and oil. The coating may be carried out by coating the surfaces of the calcium oxide with the fat and oil. The coating on the surface of the calcium oxide can prevent the calcium oxide from absorbing moisture present in the air during storage and causing the hydration. Further, the coating itself can be broken by stirring during the application as the wet sewage disposal agent and allowed to bring the surfaces of the calcium oxide into contact with the water present in the wet sewage. Upon coming the surfaces of the calcium oxide to contact directly with the water present therein, the calcium oxide begins to generate heat and starts the hydration, thereby elevating the temperature of the wet sewage. As the elevation of the temperature of the wet sewage becomes higher, the action of breaking the coating of the fat and oil is caused to happen to a faster extent and eventually the reaction is further facilitated.

As the fat and oil to be used for the present invention, there may be used fat and oil, which has a wide range of melting points, for example, such as -10°C to 200°C, and the melting point range of the fat and oil may be varied widely with the kind of origins of the fat and oil. For instance, when the fat and oil may include, for example, paraffin, an atactic polymer, or a low-molecular polymer such as an oligomer of various resins, it may preferably have a melting point in the range of from approximately 40°C to 150°C, and preferably from approximately 60°C to 120°C. The fat and oil may include, for example, the fat and oil having a melting point lower than 40°C may have the tendency of bleeding from the coating during storage, thereby making it difficult to handle and at the same time making it more likely to become more inflammable with fire, spark, etc. On the other hand, when the fat and oil having the melting point higher than 150°C is used, heat has to be applied upon coating, thereby consuming energy in larger quantities. Other kinds of fat and oil may also be used for coating. Such fat and oil may include, for example, C₅-C₂₂ saturated or unsaturated fatty acids having melting points ranging from approximately -10°C to 75°C, and preferably from approximately-5°C to 70°C. In addition, there may also be appropriately used bone fats of animal, e.g., cattle, horse, sheep, pork, etc., lard of cow, pork, sheep, etc., vegetable oils, each having a melting point ranging e.g. from approximately -10°C to 75°C, and preferably from approximately -5°C to 70°C. Waste materials of such fats and oils may also be used. These fats and oils having lower melting points yet higher boiling points may be readily coated uniformly on the surfaces of the calcium oxide.

In addition to the fat and oil, a polyether may also be used. Such a polyether may include, for example, polyethylene glycol or polypropylene rubber.

The coating may be carried out by mixing 100 parts by weight of the calcium oxide with approximately 0.1 part by weight to 10 parts by weight of the fat and oil and/or polyether, and preferably approximately 0.5 part by weight to 6 parts by weight thereof in conventional manner, i.e., by spraying liquid, i.e., a solution, dispersion, etc., of the fat and oil and/or polyether onto the calcium oxide, blending the calcium oxide with the fat and oil and/or polyether by a blender, mixer, stirrer, etc.

Sodium silicate to be used for the present invention may include, for example, water glass, sodium metasilicate, sodium orthosilicate, sodium disilicate, sodium tetrasilicate, and the like. Among these sodium silicates, it is preferable to use water glass, sodium orthosilicate, and sodium metasilicate in terms of the easiness to produce the calcium silicate gel, etc. The sodium silicate may be preferably used in a powdery or flake form. When the sodium silicate is used in this form, it can be readily and quickly mixed with the other components of the agent and dissolved in water in the treatment system to form a gel product.

The sodium silicate may be used in the range of from approximately 5 parts by weight to 30 parts by weight with respect to 100 parts by weight of the calcium oxide. If the rate of the sodium silicate would become smaller than 5 parts by weight per 100 parts by weight of the calcium oxide, on the one hand, in particular, the solidification of organic materials become more difficult. If the rate of the sodium silicate would become larger than 30 parts by weight per 100 parts by weight of the calcium oxide, on the other, a larger amount of labor is required to be consumed for transportation or the like during the post-treatment.

As the silica, there may be used, for example, silica gel, amorphous silicon dioxide obtainable as blast furnace crashes, etc. The amount of the silica may range from approximately 5 to 30 parts by weight with respect to 100 parts by weight of the calcium oxide. As the amount of the silica would become smaller than 5 parts by weight, on the one hand, the action of trapping ammonium ions or trimethyl ammonium ions may be made more difficult, thereby causing the tendency of generating ammonia or amine odors to occur during the treatment. As the silica would be increased to an amount larger than 30 parts by weight, on the other hand, the tendency may be caused to occur that the temperature of the reaction may be lowered so that the water cannot be removed from the wet sewage to a sufficient extent.

The same tendencies may be seen for the addition of the ammonium ion trapping agent. In other words, as the amount of the ammonium ion trapping agent becomes smaller than approximately 1 part by weight per 100 parts by weight of the calcium oxide, on the one hand, the rate at which ammonium ions or trimethyl ammonium ions are trapped may be lowered and the tendency of generating ammonia or amine malodors may be caused to occur to a higher extent during the treatment. As the amount of the ammonium ion trapping agent becomes larger than approximately 10 parts by weight per 100 parts by weight of the calcium oxide, on the other hand, the temperature of the reaction may be caused to be lowered, thereby making it difficult to remove water from the wet sewage to a sufficiently higher extent.

The ammonium ion trapping agent for the wet sewage disposal agent according to the present invention may include, for example, a chloride such as zinc chloride, aluminum chloride, tin chloride, iron chloride, etc., a nitrate such as zinc nitrate, aluminum nitrate, tin nitrate, iron nitrate, etc., a sulfate such as zinc sulfate, aluminum sulfate, tin sulfate, iron sulfate, potassium hydrogen sulfate, sodium hydrogen sulfate, ammonium iron sulfate, potassium aluminum sulfate, sodium aluminum sulfate, etc., a phosphate such as ammonium dihydrogen phosphate, potassium dihydrogen phosphate, sodium dihydrogen phosphate, etc. A hydrochloride thereof may also be used. The ammonium ion trapping agent may be used singly or in combination oftwo or more.

The ammonium ion trapping agent may be selected appropriately in accordance with the concentration or kind of ammonium ions to be treated. The ammonium ion trapping agents can trap the ammonium ions in an efficient fashion and have the action of adsorbing the ammonium ions on the silica such as silica gel, etc.

Further, when the nitrate and/or the phosphate are or is used as the ammonium ion trapping agent, the ammonium ions and/or the phosphate ions can be used as increasing the properties of fertilizers and the residues obtained by treating the wet sewage can be produced as fertilizers. The ammonium ion trapping agent can be used in the powdery form or in the form of a concentrated solution.

The wet sewage disposal method according to the present invention comprises the step of stirring wet sewage including, e.g., manure of animals, garbage, etc. by adding a given amount of the wet sewage disposal agent to the wet sewage. The wet sewage disposal agent may be added at the rate of approximately 20 to 150 parts by weight per 100 parts by weight of the wet sewage.

The wet sewage disposal method can remove water from the wet sewage in a very short period of time with a high degree of efficiency by utilizing the heat produced by the hydration reaction of the calcium oxide, and does not require the use of a heating device or a deodorizing device. As the water is removed from the wet sewage, the materials become a solid state. Therefore, the wet sewage disposal method is superior in terms of energy consumption and workability. It is further superior in terms of sanitation because hazardous germs can be killed by the heat produced by the reaction with the calcium oxide.

The stirring step may be carried out with a propeller stirrer, a ribbon mixer or the like. Further, it little generates malodors during the treatment so that it can be carried out with simplified equipment such as a mixer vehicle, etc., and that the wet sewage can be immediately treated on site where it is collected. Therefore, the wet sewage disposal method can be used effectively as measures that can be adopted at the time of accidents such as earthquake, etc.

The present invention will be described in more detail by way of working examples.

The wet sewage disposal agents to be used for the following examples were prepared and treated in the manner as will be described below.

Wet sewage disposal agent #1: A mixture composed of 100 parts by weight of calcined lime (95% as calcium oxide) having an average particle size of 100 mesh, 20 parts by weight of sodium silicate, 20 parts by weight of silica, and 5 parts by weight of aluminum nitrate as an ammonium ion trapping agent.

Wet sewage disposal agent #2: A mixture composed of 103 parts by weight of calcined lime with the surfaces thereof coated with bone fat at the rate of approximately 3% by weight, 20 parts by weight of sodium silicate, 20 parts by weight of silica, and 5 parts by weight of aluminum sulfate as an ammonium ion trapping agent.

Wet sewage disposal agent #3 (for Comparative Use): A mixture composed of 103 parts by weight of calcined lime with the surfaces thereof coated with bone fat at the rate of approximately 3% by weight, 20 parts by weight of sodium silicate, and 20 parts by weight of silica. The agent does not contain any ammonium ion trapping agent.

Each of the wet sewage disposal agents as described above was prepared by mixing all the components with a powder mixer.

### Example 1: Treatment of Manure

As a sample, manure was collected with a vacuum car. The sample contained water at the rate of approximately 95% as a wet standard).

The sample (100 grams) was placed in a 1-liter ribbon-type mixer. To the sample was added the wet sewage disposal agent #1 at the rate of 70 grams. When the stirring was started, the exothermic reaction was caused to occur within short and the water was allowed to evaporate from the sample. During the treatment, no ammonia odors smelled, and the sample was dried into powder in 15 minutes.

The test results are shown in Table 1 below.

### Comparative Example 1:

For a sample of the Comparative Example 1, there was used the identical sample used in the Example 1. The sample (100 grams) was placed in a 1-liter ribbon-type mixer and treated in substantially the same as in the Example 1 by using the wet sewage disposal agent #3 which did not contain any ammonium ion trapping agent.

In this comparative example, strong malodors resulting from ammonia gases, etc. were caused to smell during the treatment. The sample was turned powdery in 20 minutes after the treatment with the wet sewage disposal agent.

The test results are shown in Table 1 below.

**TABLE 1**

| ITEMS FOR INVESTIGATION | AGENT #1 (wt%) | AGENT #3 (wt%) | METHOD FOR ANALYSIS |
|---|---|---|---|
| Total Nitrogen | 0.32 | 0.23 | Bottom sediment investigation #18 |
| Total Phosphorus | 0.097 | 0.096 | Bottom sediment investigation #19 |
| Total Calcium | 0.069 | 0.064 | Based on bottom sediment investigation #6 |
| Calcium | 40.2 | 40.2 | Based on bottom sediment investigation #6 |

As apparent from Table 1 above, the sample treated with the wet sewage disposal agent #1 was found to contain the nitrogenous components at the rate of approximately 1.4 times that contained in the sample treated with the wet sewage disposal agent #3 which did not contain the ammonium ion trapping agent. This result confirms the effects of the ammonium ion trapping agent. It was further found that the sample treated with the wet sewage disposal agent #1 contained larger quantities of phosphate and potassium components, which are useful for the utilization as fertilizers. Moreover, it had a larger calcium content so that it can be used as fertilizers, soil conditioning agents, and the like.

The test results indicated that malodorous components were adsorbed removing the malodors. Further, the sample treated with the wet sewage disposal agent #1 was made powdery so that it was made easy to handle.

### Example 2: Cattle Manure

As a sample, cattle manure (a water content: about 45%) was collected with a vacuum collector in substantially the same manner as in Example 1.

To 200 grams of the sample placed in a 1-liter container was added 160 grams of the wet sewage disposal agent #2, and the mixture was stirred. During the stirring, the exothermic reaction proceeded to generate heat leaving the sample in a powdered state in about 20 minutes after the stirring has been started. In this case, it was found that the exothermic reaction proceeded in a milder way than the exothermic reaction occurred in Example 1 because the wet sewage disposal agent #2 did not contain the bone fat, unlike the wet sewage disposal agent #1. During the treatment, it was found that no malodors emitted at all.

The sample was analyzed for its composition and Table 2 shows the results.

### Comparative Example 2:

The cattle manure sample (100 grams) collected above was treated with the wet sewage disposal agent #3 containing no ammonium ion trapping agent in substantially the same manner as in Example 2. It was found that strong malodors smelled during the treatment.

The sample was analyzed for its composition and Table 2 shows the results.

**TABLE 2**

| ITEMS FOR INVESTIGATION | AGENT #2 (wt%) | AGENT #3 (wt%) | METHOD FOR ANALYSIS |
|---|---|---|---|
| Total Nitrogen | 0.39 | 0.25 | Bottom sediment investigation #18 |
| Total Phosphorus | 0.038 | 0.036 | Bottom sediment investigation #19 |
| Total Calcium | 0.070 | 0.068 | Based on bottom sediment investigation #6 |
| Calcium | 48.9 | 48.6 | Based on bottom sediment investigation #6 |

As is apparent from Table 2 above, it was found that the sample treated with the wet sewage disposal agent #2 contained the components which are useful for fertilizers and that it contained the nitrogenous components in larger quantities than that treated with the wet sewage disposal agent #1 which contained no ammonium ion trapping agent.

### Example 3: Treatment of garbage

As a sample, there was collected garbage (water content: about 70%) consisting of vegetable residues as well as fish and shell residues in a ratio of about two to one.

The sample (300 grams) was placed in a 2-liter container and 60 grams of the wet sewage disposal agent #2 was added. The mixture was then stirred for 20 minutes with a mixer. It was found that little malodors smelled during the stirring. The sample turned into a powdery state after the stirring has been finished. It was further found that the weight of the garbage was reduced to about 60% of the original weight of the garbage and the volume was reduced to about 70%.

The sample treated with the wet sewage disposal agent #2 was analyzed for its components and the results are shown in Table 3 below.

### Comparative Example 3:

The sample in the amount of 300 grams was treated with the wet sewage disposal agent #3 in substantially the same manner as in Example 3. It was found that no malodors smelled during the stirring.

The sample treated with the wet sewage disposal agent #2 was analyzed for its components and the results are shown in Table 3 below.

**TABLE 3**

| ITEMS FOR INVESTIGATION | AGENT #2 (wt%) | AGENT #3 (wt%) | METHOD FOR ANALYSIS |
|---|---|---|---|
| Total Nitrogen | 0.24 | 0.19 | Bottom sediment investigation #18 |
| Total Phosphorus | 0.05 | 0.05 | Bottom sediment investigation #19 |
| Total Calcium | 0.25 | 0.24 | Based on bottom sediment investigation #6 |
| Calcium | 37.8 | 37.1 | Based on bottom sediment investigation #6 |

As is apparent from Table 3 above, the sample treated with the wet sewage disposal agent #2 contained the components for use with fertilizers and it contained the nitrogenous components in larger quantities than the sample treated with the wet sewage disposal agent #3 which contains no ammonium ion trapping agent. Further, it is rich in potassium and calcium components and useful for fertilizers and other purposes.

### EFFECTS OF INVENTION

The wet sewage disposal agent according to the present invention, which comprises a composition containing calcium oxide, sodium silicate, silica, and an ammonium ion trapping agent, can offer various advantages in that the temperature of the treatment system of wet sewage can be elevated by the heat generated by the hydration reaction of calcium oxide to a level high enough to cause the water contained therein to evaporate. The heat can also kill hazardous germs which propagate in wet sewage. The remaining product can be yielded in a powdery form which is easy to handle and safe in terms of sanitation.

The wet sewage disposal agent according to the present invention further offers an advantage in that it can adsorb weakly acidic malodorous components such as mercaptan, etc., on reaction products which are insoluble in water, and which are obtainable by the reaction of calcium oxide resulting from calcium oxide with sodium silicate. The reaction products may include, for example, sodium silicate gel, calcium silicate gel, sodium calcium silicate gel, and the like.

Furthermore, the wet sewage disposal agent according to the present invention can efficiently adsorb ammonium ions on silica because it contains the ammonium ion trapping agent and the silica, so that it can prevent the generation of malodorous gases such as, e.g., ammonia and trimethyl amine during the treatment, and the pollution of the environment around the treatment site. Moreover, the wet sewage to be treated contains larger quantities of nitrogenous components so that it can be used for fertilizers and soil conditioning agents as secondary applications.

In addition, the calcium oxide is coated with fat and oil or a polyether so that the wet sewage disposal agent according to the present invention can be prevented from being hydrated as a result of absorption of moisture in the air during storage. Further, when the wet sewage disposal agent is stirred, the coating formed on the calcium oxide is broken and allowed to come into contact with water, generating heat and consequently starting the hydration to raise the temperature of the wet sewage. As the temperature of the wet sewage becomes higher, the coating formed on the calcium oxide becomes more breakable and the hydration is promoted to a faster extent.

This configuration of the wet sewage disposal agent according to the present invention can promote the drying of the wet sewage to dryness and the dried sewage residues can be used for fertilizers and the like.

Moreover, the wet sewage disposal agent according to the present invention contains the ammonium ion trapping agent which may include, for example, sulfates, chlorides, hydrochlorides, nitrates, phosphates or the like. The ammonium ion trapping agent may be selected in accordance with the concentration and kind of ammonium ions contained in wet sewage to be treated, and can efficiently trap the ammonium ions and adsorb them on the silica. In particular, when the nitrates or the phosphates are selected as the ammonium ion trapping agent, the wet sewage disposal agent containing the such ammonium ion trapping agent may also be used for fertilizers as secondary applications because the nitrate or phosphate ions can supplement the properties of fertilizer components.

In another aspect of the present invention, the wet sewage disposal method can remove water contents from wet sewage such as, for instance, manure, garbage, etc., and solidify the wet sewage in an extremely short period of time with a high degree of efficiency due to the heat generated by the exothermic reaction based on the hydration of the calcium oxide. This wet sewage disposal method can furthermore offer an advantage in that it does not require the use of a heating or deodorizing apparatus. Therefore, the wet sewage disposal method is superior in the ability to save energy and in workability. Moreover, it can kill hazardous germs quickly due to the high temperature generated by the heat during the reaction so that it is extremely advantageous in terms of sanitation.

## Claims

1. A wet sewage disposal agent for disposing of wet sewage, comprising:
100 parts by weight of calcium oxide;
5-30 parts by weight of sodium silicate;
5-30 parts by weight of silica; and
1-10 parts by weight of an ammonium ion trapping agent.

2. The wet sewage disposal agent according to claim 1, wherein: said calcium oxide has a purity of 50% or higher.

3. The wet sewage disposal agent according to claim 1, wherein: said calcium oxide has an average particle size ranging from approximately 0.001 mm to 10 mm.

4. The wet sewage disposal agent according to claim 1, wherein:
the surface of said calcium oxide is coated with fat or oil having a melting point of approximately -10°C to 200°C, or a polyether.

5. The wet sewage disposal agent according to claim 1, wherein:
said ammonium ion trapping agent is a chloride, a sulfate, a nitrate, or a phosphate.

6. The wet sewage disposal agent according to claim 5, wherein:
said chloride is zinc chloride, ammonium chloride, tin chloride or iron chloride;
said sulfate is zinc sulfate, ammonium sulfate, tin sulfate, iron sulfate, potassium hydrogen sulfate, sodium hydrogen sulfate, ammonium iron sulfate, potassium aluminum sulfate or sodium aluminum sulfate;
said nitrate is zinc nitrate, ammonium nitrate, tin nitrate or iron nitrate; or
said phosphate is ammonium dihydrogen phosphate, potassium dihydrogen phosphate or sodium dihydrogen phosphate.

7. A wet sewage disposal method for disposing of wet sewage, comprising:
the step of adding from 20 parts by weight to 150 parts by weight of a wet sewage disposal agent to 100 parts by weight of wet sewage; and
the step of stirring a mixture of the wet sewage with the wet sewage disposal agent.
